# EUROPÄISCHE PATENTSCHRIFT

(11) **EP 1 441 158 B1**
(45) Veröffentlichungstag und Bekanntmachung des Hinweises auf die Patenterteilung: **16.11.2005**
(21) Anmeldenummer: 03027620.8
(22) Anmeldetag: 02.12.2003
(51) Int. Cl.: F16J 15/32

(54) **Dichtring**
Sealing ring
Joint d'étanchéité

(30) Priorität: 25.01.2003 DE 10302976
(43) Veröffentlichungstag der Anmeldung: 28.07.2004
(73) Patentinhaber: Carl Freudenberg KG, 69469 Weinheim (DE)
(72) Erfinder: Hintenlang, Günter, 69518 Abtsteinach (DE); Sebök, Szaboles, 6000 Kecskemét (HU); Marchal, Jean Philippe, 52600 Chalindrey (FR)

(56) Entgegenhaltungen:
- EP-A- 0 188 140
- DE-C- 3 503 602
- GB-A- 1 299 685
- US-A- 4 623 153

## Beschreibung

### Technisches Gebiet

Die Erfindung betrifft einen Dichtring, umfassend einen Stützring, der mit einer ersten Dichtlippe aus elastomerem Werkstoff verbunden ist sowie eine zweite Dichtlippe aus polymerem Werkstoff, wobei die zweite Dichtlippe durch einen Klemmring am Stützkörper festgelegt ist und als Vorschaltdichtung für die erste Dichtlippe ausgebildet ist.

### Stand der Technik

Aus der US 4,623,153 ist ein Dichtring bekannt, umfassend einen Stützring, der mit einer ersten Dichtlippe aus elastomerem Werkstoff verbunden ist sowie eine zweite Dichtlippe aus polymerem Werkstoff, beispielsweise PTFE, wobei die zweite Dichtlippe durch einem Klemmring am Stützkörper festgelegt ist. Der Klemmring ist radial innenseitig axial in Richtung des abzudichtenden Raums gekröpft, um zu bewirken, dass die zweite Dichtlippe in Richtung des abzudichtenden Raums vorgewölbt an der ersten Dichtlippe anliegt.

Aus der EP 0 188 140 ist eine Lippendichtung für eine drehende Welle bekannt, umfassend einen Stützring, der mit einer ersten Dichtlippe aus elastomerem Werkstoff verbunden ist sowie eine zweite Dichtlippe aus einem relativ steifen, jedoch verformbaren Material, wobei die zweite Dichtlippe in einer hinterschnittenen Ausnehmung des mit elastomerem Werkstoff ummantelten Stützrings verliersicher angeordnet ist. Die zweite Dichtlippe ist als selbstzentrierender Schutzring ausgebildet und weist eine Kante auf, die axial in Richtung des abzudichtenden Raums vorgewölbt ist.

Ein weiterer Dichtring ist aus der US 3,254,898 bekannt. In dieser Druckschrift ist ein Dichtring offenbart, umfassend einen Stützring und eine erste Dichtlippe aus elastomerem Werkstoff sowie eine zweite Dichtlippe aus Polytetrafluorethylen, wobei die zweite Dichtlippe ungebunden mit dem Stützkörper verklemmt ist.

### Darstellung der Erfindung

Der Erfindung liegt die Aufgabe zugrunde, einen Dichtring der eingangs genannten Art derart weiterzuentwickeln, dass sowohl die erste Dichtlippe als auch die zweite Dichtlippe während der Montage des Dichtrings gut vor einer mechanischen Beschädigung/Zerstörung geschützt sind. Besonders gut soll die vergleichsweise empfindlichere erste Dichtlippe geschützt sein. Außerdem soll die erste Dichtlippe vor einer Beaufschlagung mit die Gebrauchsdauer verringernden Verunreinigungen aus der Umgebung geschützt sein. Ferner soll der Dichtring einfach und kostengünstig herstellbar sein.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass die zweite Dichtlippe durch einen Klemmring ungebunden am Stützring festgelegt ist, dass der Klemmring als erster Zentriering zur vorzentrierten Montage eines abzudichtenden Maschinenelements in den Dichtring ausgebildet ist und, im Längsschnitt betrachtet, C-förmig, axial entgegen der Montagerichtung offen, ausgebildet ist und eine Einführschräge aufweist, die axial entgegen der Montagerichtung des Maschinenelements und der ersten Dichtlippe vorsteht und einen sich axial entgegen der Montagerichtung und der ersten Dichtlippe trichterförmig erweiternden Durchmesser aufweist und dass die zweite Dichtlippe als zweiter Zentrierring zur weiter vorzentrierten Montage des Maschinenelements ausgebildet und dem ersten Zentriering in Montagerichtung nachgeordnet ist.

Bei einem solchen Dichtring ist von Vorteil, dass die vergleichsweise empfindliche erste Dichtlippe, die aus elastomerem Werkstoff besteht, bei der Montage des Dichtrings und während der bestimmungsgemäßen Verwendung besonders gut vor Beschädigung/Zerstörung geschützt ist. Während der Montage des Dichtrings wird das abzudichtenden Maschinenelement, bei dem es sich zumeist um eine Welle handelt, durch den als ersten Zentrierring ausgebildeten Klemmring vorzentriert. Die Vorzentrierung erfolgt dadurch, dass das Maschinenelement durch die Einführschräge in eine grober vorzentrierte erste Position zur ersten Dichtlippe gelangt. Anschließend passiert das Maschinenelement während der Montage die zweite Dichtlippe, die aus polymerem Werkstoff besteht, herstellungsbedingt die Form einer kreisringförmigen Scheibe aufweist und quer zum abzudichtenden Maschinenelement angeordnet ist. Die zweite Dichtlippe ist als zweiter Zentrierring ausgebildet. Während der Montage wird der radial innere Rand des zweiten Zentrierrings montagebedingt in Richtung der ersten Dichtlippe umgeformt. Sobald das Maschinenelement vom zweiten Zentrierring außenumfangsseitig umschlossen ist, ist das Maschinenelement in einer feiner vorzentrierten zweiten Position zur ersten Dichtlippe angeordnet, wobei der Dichtring und das Maschinenelement im Wesentlichen bereits konzentrisch zueinander angeordnet sind. Werden der Dichtring und das abzudichtende Maschinenelement in Montagerichtung weiter zueinander bewegt, durchdringt das Maschinenelement, das bereits im Wesentlichen konzentrisch zum Dichtring angeordnet ist, die vergleichsweise empfindlichere erste Dichtlippe. Durch die zweistufige, insgesamt sehr gute Vorzentrierung des Maschinenelements, bezogen auf den Dichtring, sind die mechanischen Belastungen auf die erste Dichtlippe während der Montage nur sehr gering, und die Gefahr von einer Beschädigung/Zerstörung der ersten Dichtlippe während der Montage ist auf ein Minimum begrenzt.

Während der bestimmungsgemäßen Verwendung des Dichtrings funktioniert der zweite Zentrierring als zweite Dichtlippe, die der ersten Dichtlippe in Richtung der Umgebung vorgeschaltet ist und dadurch ein Eindringen von Verunreinigungen aus der Umgebung in Richtung der ersten Dichtlippe verhindert. Durch die Mehrfachfunktion der zweiten Dichtlippe (zweite Stufe der Vorzentrierung des Maschinenelements während der Montage und Vorschaltdichtung für die erste Dichtlippe), weist der Dichtring einen teilearmen Aufbau auf und ist dadurch einfach und kostengünstig herstellbar.

Der Klemmring ist, im Längsschnitt betrachtet, C-förmig, axial gegen die Montagerichtung offen ausgebildet. Mit seinem radial äußeren Schenkel kann der Klemmring in den Axialvorsprung des Stützrings eingepresst sein. Der Klemmring bewirkt eine erste Vorzentrierung während der Montage von Dichtring und Maschinenelement, und gleichzeitig hält der Klemmring die als zweiten Zentrierring ausgebildete zweite Dichtlippe in ihrer Position.

Die erste Dichtlippe ist bevorzugt axial in Montagerichtung und axial in Richtung des abzudichtenden Raums vorgewölbt. Die gestellte Aufgabe wird durch eine solche Ausgestaltung besonders gut gelöst.

Die zweite Dichtlippe besteht bevorzugt aus PTFE und ist axial in Montagerichtung und axial in Richtung der ersten Dichtlippe vorgewölbt. PTFE ist für die beiden Funktionen der zweiten Dichtlippe, nämlich weitere Vorzentrierung des Maschinenelements und anschließender Schutz der ersten Dichtlippe vor Verunreinigungen aus der Umgebung, besonders gut geeignet. PTFE ist durch den Memory-Effekt, den dieser Werkstoff hat, bestrebt, im Anschluß an seine Umformung, seine ursprüngliche Form wieder anzunehmen. Im hier beschriebenen Fall wäre die herstellungsbedingt ursprünglich kreisringförmige Scheibe, die im Anschluß an die Montage des Maschinenelements radial innenseitig in Richtung der ersten Dichtlippe elastisch vorgewölbt ist, bestrebt, ihre ursprüngliche Gestalt wieder anzunehmen. Dadurch wird die Oberfläche des abzudichtenden Maschinenelements von der zweiten Dichtlippe unter radialer Vorspannung umschlossen. Eine besonders gute Zentrierung von Dichtring und abzudichtendem Maschinenelement zueinander ist dadurch gegeben. Außerdem ist PTFE als Dichtungswerkstoff gut geeignet. Nach einem vernachlässigbar geringem Anfangsverschleiß im Bereich der Kontaktfläche zwischen der zweiten Dichtlippe und dem abzudichtenden Maschinenelement, verglast die Oberfläche der aus PTFE bestehenden zweiten Dichtlippe und ist dadurch besonders verschleißarm und somit widerstandsfähig.

Der Stützring kann, im Längsschnitt betrachtet, im Wesentlichen T-förmig ausgebildet sein und einen Radialschenkel aufweisen, an dem die erste Dichtlippe festgelegt ist. Ein Stützring mit einer solchen Form ist einfach und kostengünstig herstellbar. Der Stützring besteht bevorzugt aus einem metallischen Werkstoff, kann jedoch auch aus einem davon abweichenden, zähharten Werkstoff bestehen.

Der Radialschenkel ist bevorzugt vollständig vom elastomeren Werkstoff der ersten Dichtlippe ummantelt. Insbesondere dann, wenn das abzudichtende Medium den Werkstoff, aus dem der Stützring besteht, angreifen würde, ist eine solche Ummantelung von hervorzuhebendem Vorteil. Die Ummantelung bildet dann einen Korrosionsschutz.

Der Stützring kann außenumfangsseitig von einer statisch beanspruchten Dichtung umschlossen sein, wobei die statische Dichtung aus einem elastomeren Werkstoff bestehen kann. Die statische Dichtung kann einstückig und materialeinheitlich mit der ersten Dichtlippe ausgebildet sein. Die statische Dichtung berührt beispielsweise die eine Gehäusebohrung begrenzende Wandung unter elastischer Vorspannung dichtend.

Bevorzugt besteht der Klemmring aus Federstahl. Hierbei ist von Vorteil, dass die Einführschräge federnd, das heißt elastisch nachgiebig ausgebildet ist. Dadurch wird die Montage von Dichtring und abzudichtenden Maschinenelement wesentlich vereinfacht. Eine unerwünschte plastische Verformung der Einführschräge während der Montage ist dadurch ausgeschlossen.

### Ausführungsbeispiel

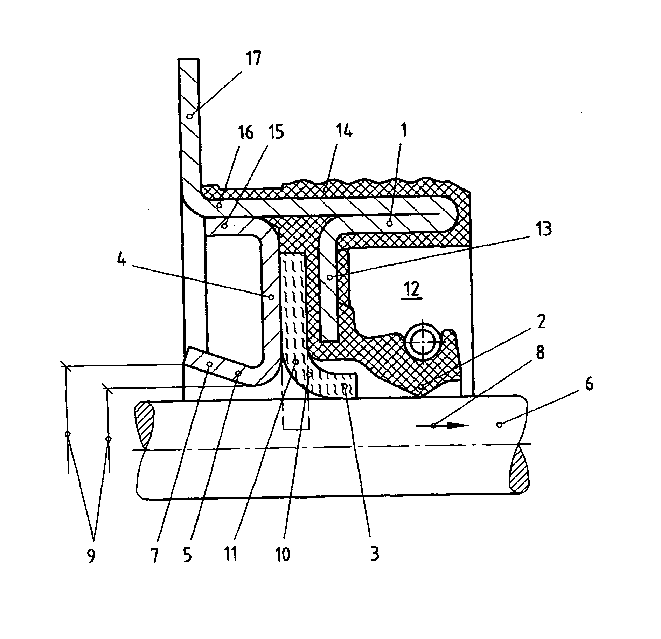

Ein Ausführungsbeispiel des erfindungsgemäßen Dichtrings wird nachfolgend anhand der Figur näher beschrieben.

In der Figur ist der Dichtring im montierten Zustand während seiner bestimmungsgemäßen Verwendung dargestellt. Der Dichtring umfaßt einen Stützring 1 aus einem metallischen Werkstoff, an dessen Radialschenkel 13 die erste Dichtlippe 2 aus elastomerem Werkstoff anvulkanisiert ist. Der Stützring 1 ist, im Längsschnitt betrachtet, T-förmig ausgebildet und außenumfangsseitig von der statisch beanspruchten Dichtung 14 umschlossen, die in dem hier gezeigten Ausführungsbeispiel eine nicht dargestellte Gehäusebohrung abdichtet. Auf der dem abzudichtenden Raum 12 axial abgewandten Seite weist der Stützring 1 einen Radialflansch 17 auf, der an die Außenseite einer Gehäusewand anlegbar ist. Dieser Radialflansch 17 ist als Anschlag ausgebildet und bewirkt, bei Anlage an der Gehäusewand, die exakte Positionierung des Dichtrings in axialer Richtung zum Gehäuse und dem abzudichtenden Maschinenelement 6.

Auf der dem abzudichtenden Raum 12 abgewandten Seite des Radialschenkels 13 ist die zweite Dichtlippe 3 angeordnet, die aus PTFE besteht und als zweiter Zentrierring 10 zur weiter vorzentrierten Montage des Maschinenelements 6 ausgebildet ist. Das Maschinenelement 6 ist im hier gezeigten Ausführungsbeispiel eine Welle.

Die zweite Dichtlippe 3 wird innerhalb des Dichtrings nur durch den Klemmring 4 ungebunden geklemmt gehalten. Der Klemmring 4 ist als erster Zentrierring 5 ausgebildet und umfaßt eine Einführschräge 7, die axial entgegen der Montagerichtung 8 des Maschinenelements 6 und der ersten Dichtlippe 2 vorsteht. Die Einführschräge 7 weist einen sich axial entgegen der Montagerichtung 8 und der ersten Dichtlippe 2 trichterförmig erweiternden Durchmesser auf.

Die zweite Dichtlippe 3, die als zweiter Zentrierring 10 ausgebildet ist, ist dem ersten Zentrierring 5 in Montagerichtung 8 nachgeordnet und außerdem als Vorschaltdichtung 11 für die erste Dichtlippe 2 ausgebildet.

## Patentansprüche

1. Dichtring, umfassend einen Stützring (1), der mit einer ersten Dichtlippe (2) aus elastomerem Werkstoff verbunden ist sowie eine zweite Dichtlippe (3) aus polymerem Werkstoff, wobei die zweite Dichtlippe (3) durch einen Klemmring (4) am Stützkörper (1) festgelegt ist und als Vorschaltdichtung (11) für die erste Dichtlippe (2) ausgebildet ist, **dadurch gekennzeichnet, dass** die zweite Dichtlippe (3) durch den Klemmring (4) ungebunden geklemmt am Stützkörper (1) festgelegt ist, dass der Klemmring (4) als erster Zentrierring (5) zur vorzentrierten Montage eines abzudichtenden Maschinenelements (6) in den Dichtring ausgebildet ist und, im Längsschnitt betrachtet, C-förmig, axial entgegen der Montagerichtung (8) offen, ausgebildet ist und eine Einführschräge (7) aufweist, die axial entgegen der Montagerichtung (8) des Maschinenelements (6) und der ersten Dichtlippe (2) vorsteht und einen sich axial entgegen der Montagerichtung (8) und der ersten Dichtlippe (2) trichterförmig erweiternden Durchmesser (9) aufweist, wobei die zweite Dichtlippe (3) als zweiter Zentrierring (10) zur weiter vorzentrierten Montage des Maschinenelements (6) ausgebildet und dem ersten Zentrierring (5) in Montagerichtung (8) nachgeordnet ist.

2. Dichtring nach Anspruch 1, **dadurch gekennzeichnet, dass** die erste Dichtlippe (2) axial in Montagerichtung (8) und axial in Richtung des abzudichtenden Raums (12) vorgewölbt ist.

3. Dichtring nach einem der Ansprüche 1 oder 2, **dadurch gekennzeichnet, dass** die zweite Dichtlippe (3) aus PTFE besteht und axial in Montagerichtung (8) und axial in Richtung der ersten Dichtlippe (2) vorgewölbt ist.

4. Dichtring nach einem der Ansprüche 1 bis 3, **dadurch gekennzeichnet, dass** der Stützring (1), im Längsschnitt betrachtet, im Wesentlichen T-förmig ausgebildet ist und einen Radialschenkel (13) aufweist, an dem die erste Dichtlippe (2) festgelegt ist.

5. Dichtring nach Anspruch 4, **dadurch gekennzeichnet, dass** der Radialschenkel (13) vollständig vom elastomeren Werkstoff der ersten Dichtlippe (2) ummantelt ist.

6. Dichtring nach einem der Ansprüche 1 bis 5, **dadurch gekennzeichnet, dass** der Stützring (1) außenumfangsseitg von einer statisch beanspruchten Dichtung (14) umschlossen ist.

7. Dichtring nach Anspruch 6, **dadurch gekennzeichnet, dass** die statische Dichtung (14) aus elastomerem Werkstoff besteht.

8. Dichtring nach einem der Ansprüche 6 oder 7, **dadurch gekennzeichnet, dass** die statische Dichtung (14) einstückig und materialeinheitlich mit der ersten Dichtlippe (2) ausgebildet ist.

9. Dichtring nach einem der Ansprüche 1 bis 8, **dadurch gekennzeichnet, dass** der Klemmring (4) mit seinem radial äußeren Axialschenkel (15) in den Axialvorsprung (16) des Stützrings (1) eingepresst ist.

10. Dichtring nach einem der Ansprüche 1 bis 9, **dadurch gekennzeichnet, dass** der Klemmring (4) aus Federstahl besteht.

## Claims

1. Sealing ring, comprising a support ring (1), which is connected to a first sealing lip (2) of elastomer material together with a second sealing lip (3) of polymer material, the second sealing lip (3) being fixed to the support body (1) by a clamping ring (4) and being designed as superimposed seal (11) for the first sealing lip (2), **characterized in that** the second sealing lip (3) is fixed, separately clamped to the support body (1) by the clamping ring (4), that the clamping ring (4) is designed as first centring ring (5) for the pre-centred fitting of a sealed machine element (6) into the sealing ring and is, viewed in longitudinal section, axially open in a C-shape counter to the fitting direction (8) and has an insertion incline (7), which projects axially in opposition to the fitting direction (8) of the machine element (6) and of the first sealing lip (2) and has a diameter (9) widening in a funnel shape in axial opposition to the fitting direction (8) and to the first sealing lip (2), the second sealing lip (3) being designed as second centring ring (10) for the further pre-centred fitting of the machine element (6) and being arranged behind the first centring ring (5) in the fitting direction (8).

2. Sealing ring according to Claim 1, **characterized in that** the first sealing lip (2) is axially pre-arched in the fitting direction (8) and axially pre-arched in the direction of the space (12) to be sealed.

3. Sealing ring according to either of Claims 1 or 2, **characterized in that** the second sealing lip (3) is composed of PTFE and is axially pre-arched in the fitting direction (8) and axially pre-arched in the direction of the first sealing lip (2).

4. Sealing ring according to any one of Claims 1 to 3, **characterized in that** the support ring (1), viewed in longitudinal section, is of basically T-shaped design and has a radial leg (13), to which the first sealing lip (2) is fixed.

5. Sealing ring according to Claim 4, **characterized in that** the radial leg (13) is completely enveloped by the elastomer material of the first sealing lip (2).

6. Sealing ring according to any one of Claims 1 to 5, **characterized in that** the outer periphery of the support ring (1) is enclosed by a statically stressed seal (14).

7. Sealing ring according to Claim 6, **characterized in that** the static seal (14) is composed of elastomer material.

8. Sealing ring according to either of Claims 6 or 7, **characterized in that** the static seal (14) is integrally formed with and from the same material as the first sealing lip (2).

9. Sealing ring according to any one of Claims 1 to 8, **characterized in that** the clamping ring (4) is impressed with its radially outer axial leg (15) into the axial projection (16) of the support ring (1).

10. Sealing ring according to any one of Claims 1 to 9, **characterized in that** the clamping ring (4) is composed of spring steel.

## Revendications

1. Joint d'étanchéité, comprenant une bague de soutien (1), qui est assemblée à une première lèvre d'étanchéité (2) en une matière élastomère, ainsi qu'une deuxième lèvre d'étanchéité (3) en matière polymère, dans lequel la deuxième lèvre d'étanchéité (3) est fixée par une bague de serrage (4) contre le corps de soutien (1) et est formée comme une garniture d'étanchéité d'entrée (11) pour la première lèvre d'étanchéité (2), **caractérisé en ce que** la deuxième lèvre d'étanchéité (3) est fixée sur le corps de soutien (1) en étant serrée par la bague de serrage (4) sans être assemblée, **en ce que** la bague de serrage (4) est configurée comme une première bague de centrage (5) pour le montage précentré d'un élément de machine à rendre étanche (6) dans le joint d'étanchéité et, considérée en coupe longitudinale, est en forme de C ouvert axialement à l'opposé de la direction de montage (8), et présente une surface d'introduction inclinée (7), qui est saillante axialement à l'opposé de la direction de montage (8) de l'élément de machine (6) et de la première lèvre d'étanchéité (2), et présente un diamètre (9) s'évasant en forme d'entonnoir axialement à l'opposé de la direction de montage (8) et de la première lèvre d'étanchéité (2), dans lequel la deuxième lèvre d'étanchéité (3) est configurée comme une deuxième bague de centrage (10) pour un nouveau montage précentré de l'élément de machine (6) et est disposée après la première bague de centrage (5) dans la direction de montage (8).

2. Joint d'étanchéité selon la revendication 1, **caractérisé en ce que** la première lèvre d'étanchéité (2) est précintrée axialement dans la direction de montage (8) et axialement en direction de l'espace à rendre étanche (12).

3. Joint d'étanchéité selon la revendication 1 ou 2, **caractérisé en ce que** la deuxième lèvre d'étanchéité (3) se compose de PTFE et est précintrée axialement dans la direction de montage (8) et axialement en direction de la première lèvre d'étanchéité (2).

4. Joint d'étanchéité selon l'une quelconque des revendications 1 à 3, **caractérisé en ce que** la bague de soutien (1), considérée en coupe longitudinale, est sensiblement en forme de T et présente une branche radiale (13), sur laquelle la première lèvre d'étanchéité (2) est fixée.

5. Joint d'étanchéité selon la revendication 4, **caractérisé en ce que** la branche radiale (13) est entièrement enveloppée par la matière élastomère de la première lèvre d'étanchéité (2).

6. Joint d'étanchéité selon l'une quelconque des revendications 1 à 5, **caractérisé en ce que** la bague de soutien (1) est entourée extérieurement d'une garniture d'étanchéité (14) sollicitée statiquement.

7. Joint d'étanchéité selon la revendication 6, **caractérisé en ce que** la garniture d'étanchéité statique (14) se compose de matière élastomère.

8. Joint d'étanchéité selon la revendication 6 ou 7, **caractérisé en ce que** la garniture d'étanchéité statique (14) est réalisée d'une seule pièce et en continuité de matière avec la première lèvre d'étanchéité (2).

9. Joint d'étanchéité selon l'une quelconque des revendications 1 à 8, **caractérisé en ce que** la bague de serrage (4) est pressée avec sa branche axiale radialement extérieure (15) dans la saillie axiale (16) de la bague de soutien (1).

10. Joint d'étanchéité selon l'une quelconque des revendications 1 à 9, **caractérisé en ce que** la bague de serrage (4) se compose d'acier à ressort.
